# EUROPÄISCHE PATENTSCHRIFT

(11) **EP 3 662 458 B1**
(45) Veröffentlichungstag und Bekanntmachung des Hinweises auf die Patenterteilung: **24.08.2022**
(21) Anmeldenummer: 17764555.3
(22) Anmeldetag: 06.09.2017
(51) Int. Cl.: G08B 19/02, B60R 16/023, G01N 21/55

(54) **VERFAHREN UND VORRICHTUNG ZUR ERZEUGUNG EINES VOR GLÄTTE AUF EINER FAHRBAHN WARNENDEN SIGNALS**
METHOD AND DEVICE FOR GENERATING A SIGNAL WARNING OF ICE ON A ROADWAY
PROCÉDÉ ET DISPOSITIF DE GÉNÉRATION D'UN SIGNAL METTANT EN GARDE CONTRE DU VERGLAS SUR UNE VOIE DE CIRCULATION

(43) Veröffentlichungstag der Anmeldung: 10.06.2020
(73) Patentinhaber: Boschung Mecatronic AG, 1530 Payerne (CH)
(72) Erfinder: KRIESCHE, Thomas, 68259 Mannheim (DE); DÉCREVEL, Michel, 1753 Matran (CH)
(74) Vertreter: Naiu, Radu Mircea
(86) Internationale Anmeldenummer: PCT/EP2017/072355
(87) Internationale Veröffentlichungsnummer: WO 2019/048037

(56) Entgegenhaltungen:
- EP-A2- 1 635 163
- WO-A1-91/14170
- CH-A5- 653 134
- DE-A1- 19 506 550
- US-A- 3 229 271

## Beschreibung

### Gebiet der Erfindung

Die Erfindung betrifft ein Verfahren zur Erzeugung eines vor Glätte auf einer Fahrbahn warnenden Signals. Ferner betrifft die Erfindung eine Vorrichtung zur Erzeugung eines vor Glätte auf einer Fahrbahn warnenden Signals.

### Hintergrund

Reifglätte oder überfrierende Glätte führt zu einer drastischen Griffigkeitsminimierung zwischen einem Strassenbelag bzw. Fahrbahnbelag und den Reifen eines Fahrzeugs. Da solche Glätte bei Abwesenheit eines Niederschlags erfolgt, ist diese Gefahr für einen Fahrzeuglenker nicht erkennbar. Glätte, insbesondere sogenannte Reifglätte, bzw. die Ausbildung einer Eisschicht oder das Wachsen von Eiskristallen auf einer unterkühlten Oberfläche, entsteht aufgrund des Phasenübergangs von einem aus der feuchten Luft kondensierten Wasserdampf zum Feststoff. Für diesen Vorgang muss, im Gegensatz zur Eisbildung durch gefrierendes Oberflächenwasser, kein Niederschlagsereignis vorausgegangen sein. Die tatsächliche Bildung der Glätte hängt von mehreren Parametern ab, wobei Boden- und Lufttemperatur, der Taupunkt, die relative Luftfeuchtigkeit, die Sonneneinstrahlung, die Windgeschwindigkeit, die Bodenmorphologie und das allfällige Vorhandensein von Nebel eine Rolle spielen. Es zeigt sich bei Strassen, dass insbesondere in den Morgenstunden an kaltfeuchten Tagen eine zeitlich begrenzte und lokal eingeschränkte Glättebildung stattfindet. Erfolgt mit den ersten Sonnenstrahlen eine boden- bzw. vegetationsnahe Erwärmung der Luft, so hat diese Luft einerseits ein höheres Wasseraufnahmevermögen und andererseits erwärmt sie oberflächengebundenes Wasser. Unterschiedliche morphologische Landschaftsstrukturen und unterschiedliche Bodenund Pflanzenverteilung können eine bodennahe Luftzirkulation zur Fahrbahn bzw. Strasse bewirken, auf welcher Reifbildung oder Eisbildung auf der durch die nächtlichen Temperaturen unterkühlten Oberfläche stattfindet. Brücken unterkühlen nächtlich verstärkt wegen fehlender isolierender Erdschichten und bilden somit besonders die Grundlage für lokal begrenzte örtliche Stellen, an denen Reifoder Eisbildung stattfinden kann. Aber auch Strassen in der Nähe wasserreicher Gebiete sind gefährdet. Erst mit anhaltender Sonnenbestrahlung werden Reif/Eisschichten durch die Sonnenwärmestrahlung abgebaut.

Es ist bekannt, durch Reflexionsmessung von Licht im Infrarotbereich berührungslos den Fahrbahnoberflächenzustand hinsichtlich Trockenheit, Nässe oder Vereisung zu ermitteln, wozu zum Beispiel auf WO 91/14170 verwiesen werden kann. Diese dem Fachmann bekannte Reflexionsmessung der Fahrbahnoberfläche hat sich bewährt, stellt aber lediglich den Istzustand fest.

Das US-Patent 3,229,271 offenbart ein Warnungssystem für bevorstehende Bildung von Glätte, bei dem eine polierte Metalloberfläche beleuchtet wird und aus dem reflektierten Licht ein Signal generiert wird, das zur Auswertung verwendet wird, ob Glätte bevorsteht.

### Darstellung der Erfindung

Der Erfindung liegt die Aufgabe zu Grunde, die Gefahr von Bildung von Reifglätte oder überfrierender Glätte so früh und sicher erkennen zu können, damit eine wirksame Warnung des Verkehrs möglich wird oder der rechtzeitige Einsatz von Streufahrzeugen. Dies soll möglichst universell möglich sein, ohne dass ortsspezifische Annahmen oder Parameter erhoben werden müssen, welche jeweils nur für den jeweiligen Einsatzort gelten.

Diese Aufgabe wird dadurch gelöst, dass zur Erzeugung eines Signals, welches die bevorstehende bzw. zukünftige Bildung von Glätte auf einer Fahrbahn anzeigt, bevor diese tatsächlich auf der Fahrbahn entsteht, von der Fahrbahn, oder von einer Stelle benachbart der Fahrbahn, reflektierte Strahlung ausgewertet wird, welche von mindestens einer in oder auf der Fahrbahn oder der benachbarten Stelle angeordneten Referenzfläche ausgeht, die von einem vom Fahrbahnbelagsmaterial unterschiedlichen Material gebildet ist, welches aus einem Material ausgewählt ist, auf welchem sich die Glätte früher ausbildet als auf dem Fahrbahnbelagsmaterial, und wobei ein Signal abgegeben wird, wenn die Auswertung ergibt, dass sich auf der Referenzfläche Glätte gebildet hat. Die Referenzfläche weist eine angeraute Oberfläche auf.

Da sich auf der Referenzfläche die Glätte früher als auf der Oberfläche des Fahrbahnbelagsmaterials ausbildet, kann durch die Erkennung der Glätte auf der Referenzfläche ein Signal erzeugt werden, welches die Glättebildung anzeigt, bevor diese überhaupt auf der Fahrbahn bzw. Strasse auftritt. Aus diesem Signal kann eine Warnung der Strassenbenützer über aktivierbare Verkehrszeichen und/oder Navigationssysteme und/oder mobile Mediengeräte generiert werden und/oder die Ausbringung von Taumittel kann ausgelöst werden oder allenfalls auch eine Strassensperrung. Somit wird durch eine kontaktlose Fernmessung eine künstliche Fläche vermessen, die stationär in der Fahrbahn integriert vorliegt oder die allenfalls stationär neben der Fahrbahn angeordnet ist. Damit Eisglätte oder Reifglätte auf dieser Fläche früher auftritt als auf dem Fahrbahnbelagsmaterial, ist das Material der Referenzfläche entsprechend ausgewählt. Zudem ist das Material, welches die Referenzfläche bildet für den Einsatz in der Fahrbahn mechanisch in die Fahrbahn einsetzbar oder auf diese aufbringbar und verkehrsbelastbar auszuwählen und bildet nur einen lokal begrenzten Bereich der Fahrbahn, so dass durch das Material auch keine Verkehrsgefährdung auftreten kann.

Die Referenzfläche ist vorzugsweise dauerhaft in oder auf der Fahrbahn bzw. Strasse angeordnet oder allenfalls bei der Stelle neben der Fahrbahn. Vorzugsweises wird die Referenzfläche von der Oberfläche eines Referenzkörpers gebildet, der in der Strassenfahrbahn eingelassen ist.

Bevorzugt verwendet das Verfahren Licht im Infrarotbereich, insbesondere im sogenannten nahen Infrarotbereich NIR (780nm bis 3000nm) und insbesondere in einem Bereich von ca. 900nm bis 2000nm, welches als reflektierte Strahlung ausgewertet wird. Bevorzugt wird IR-Strahlung im genannten Bereich auf die Referenzfläche gerichtet und die von der Referenzfläche reflektierte Strahlung ausgewertet, um die Bildung von Reif oder Eis auf der Referenzfläche festzustellen. Dies erfolgt vorzugsweise, indem ein Vergleich des von der Referenzfläche reflektiertem Lichts mit gespeicherten, vorbekannten Informationen, insbesondere Kennlinien, erfolgt, welche für das Vorhandensein von Eis/Raureif auf der Referenzfläche im verwendeten Infrarotbereich charakteristisch sind, was eine rasche Erkennung ermöglicht. Es ist auch möglich, alternativ oder zusätzlich, ein Bild der Referenzfläche im sichtbaren Bereich aufzunehmen und die Bildung von Glätte auf der Referenzfläche durch die Auswertung des Bildes festzustellen.

Bevorzugt verwendet das Verfahren eine Referenzfläche mit einem Durchmesser oder einer Diagonalen von 100mm bis 200mm, insbesondere bis 150mm. Die Referenzfläche kann auch von einer auf dem Fahrbahnbelagsmaterial aufgebrachten Beschichtung gebildet werden. Wird die Referenzfläche, wie bevorzugt, von einem in der Fahrbahn eingelassenen Körper gebildet, so weist dieser insbesondere eine Dicke von 5mm bis 20mm auf.

Erfindungsgemäss weist die Referenzfläche eine angeraute Oberfläche auf, was die Oberfläche vergrössert, und die Oberfläche ist insbesondere wasseranziehend bzw. hydrophil. Die Referenzfläche ist im vorgenannten bevorzugten nahen Infrarotbereich reflektierend ausgebildet, insbesondere innerhalb des Bereichs von 900nm bis 2000nm reflektierend ausgebildet. Bevorzugt ist die Referenzfläche aus Metall gebildet, insbesondere aus rostfreiem Stahl oder aus einem anderen nicht- oder kaum korrodierenden Metall. Oder die Referenzfläche kann von einem offenporösen Metallschaum gebildet sein, oder die Referenzfläche wird von einer Farbschicht mit einem Anteil Metallpartikeln und/oder mit einem Anteil von Polymeren gebildet, welche nahes Infrarot reflektieren.

Der Erfindung liegt weiter die Aufgabe zu Grunde eine Vorrichtung zu schaffen, mit welcher ein Vorwarnsignal für eine bevorstehende Glättebildung auf einer Fahrbahn bzw. Strasse erzeugbar ist. Die Vorrichtung soll universell einsetzbar und kostengünstig sein.

Diese Aufgabe wird mit einer Vorrichtung gemäss Anspruch 12 gelöst.

Da sich auf der Referenzfläche die Glätte früher als auf der Oberfläche des Fahrbahnbelagsmaterials bzw. Strassenbelagsmaterials ausbildet, kann durch die Erkennung der Glätte auf der Referenzfläche der Vorrichtung ein Signal erzeugt werden, welches die Glättebildung anzeigt, bevor diese überhaupt auf der Fahrbahn bzw. Strasse auftritt. Aus diesem Signal kann durch die Vorrichtung oder eine übergeordnete Verkehrswarnungszentrale eine Warnung an die Strassenbenützer über aktivierbare Verkehrszeichen und/oder Navigationssysteme und/oder mobile Mediengeräte generiert werden und/oder die Ausbringung von Taumittel kann ausgelöst werden oder allenfalls auch eine Strassensperrung veranlasst werden. Somit wird mittels der Vorrichtung durch eine kontaktlose Fernmessung eine Referenzfläche der Vorrichtung vermessen, die stationär in der Fahrbahn bzw. Strasse integriert vorliegt oder die allenfalls stationär neben der Fahrbahn bzw. Strasse angeordnet ist. Damit Eisglätte oder Reifglätte auf dieser Fläche früher auftritt als auf dem Fahrbahnbelagsmaterial bzw. Strassenbelagsmaterial, ist das Material der Referenzfläche entsprechend ausgewählt. Zudem ist das Material, welches die Referenzfläche bildet für den Einsatz in der Fahrbahn mechanisch in die Fahrbahn einsetzbar oder auf diese aufbringbar und verkehrsbelastbar auszuwählen und bildet nur einen lokal begrenzten Bereich der Fahrbahn bzw. Strasse, so dass durch das Material auch keine Verkehrsgefährdung auftreten kann.

Vorteilhafte Ausführungen der Vorrichtung sind gemäss den abhängigen Ansprüchen ausgeführt. Insbesondere ist der Strassenzustandssensor ausgestaltet, um Licht im Infrarotbereich in Richtung der Referenzfläche auszustrahlen und das von der Referenzfläche reflektierte Licht zu empfangen und auszuwerten oder das Empfangssignal für die Auswertung bereitzustellen. Bevorzugt liegt die Wellenlänge des Lichts im sogenannten nahen Infrarotbereich NIR (780nm bis 3000nm) und insbesondere in einem Bereich von ca. 900nm bis 2000nm. Es zeigt sich, dass damit Eis oder Reif auf der Referenzfläche gut feststellbar ist. Zudem kann ein Strassenzustandssensor bekannter Art, der in einem solchen Wellenlängenbereich arbeitet modifiziert werden, dass er nur die Referenzfläche verwendet anstelle des Fahrbahn- bzw. Strassenbelags und/oder dass er sowohl für die Referenzfläche verwendbar ist als auch für die Erkennung des Zustands des Fahrbahnbelags bzw. Strassenbelags. Die Auswertung ist bevorzugt vornehmbar, indem ein Vergleich des von der Referenzfläche reflektierten Lichts mit gespeicherten, vorbekannten Informationen, insbesondere Kennlinien, erfolgt, welche für das Vorhandensein von Eis/Raureif auf der Referenzfläche im verwendeten Infrarotbereich charakteristisch sind. Alternativ oder zusätzlich kann von der Vorrichtung von der Referenzfläche reflektiertes sichtbares Licht auswertbar sein, insbesondere, indem mindestens ein Bild der Referenzfläche im sichtbaren Bereich aufnehmbar und die Bildung von Glätte auf der Referenzfläche durch die Auswertung des Bildes vornehmbar ist. Weiter ist es bevorzugt, dass die Referenzfläche von der Oberfläche eines Körpers gebildet ist, der in der Fahrbahn bzw. Strasse eingelassen ist oder an einer Stelle neben der Fahrbahn bzw. Strasse angeordnet ist. Ein solcher Körper stellt ein gegenüber der Masse des kondensierenden Wassers praktisch unendlich grosses Wärmepotential dar und sorgt für eine rasche Reif- oder Eisbildung. Dennoch kann die Referenzfläche klein gehalten werden und weist insbesondere einen Durchmesser oder eine Diagonalen von 100mm bis 200mm, insbesondere bis 150mm, auf. Erfindungsgemäss weist die Referenzfläche eine angeraute Oberfläche auf, um deren wirksame Oberfläche zu vergrössern. Ferner weist die Referenzfläche bevorzugt eine hydrophile Oberfläche auf, um die kondensierende Feuchte anziehen. Weiter ist es bevorzugt, dass die Referenzfläche aus Metall gebildet ist, insbesondere aus rostfreiem Stahl oder aus einem anderen nicht- oder kaum korrodierenden Metall, oder wobei die Referenzfläche aus einem offenporösen Metallschaum gebildet ist, oder wobei die Referenzfläche aus einer Farbschicht gebildet ist, die mit einem Anteil Metallpartikeln und/oder mit einem Anteil von Polymeren, welche nahes Infrarot reflektieren, versehen ist.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigt:
Figur 1 schematisch die Anordnung eines kontaktlos messenden Strassenzustandssensors bei einer Fahrbahn bzw. Strasse;
Figur 2 einen Querschnitt durch den Fahrbahn bzw. Strassenbelag mit einem Körper, der die Referenzfläche bildet;
Figur 3 einen Querschnitt durch den Fahrbahn bzw. Strassenbelag mit einer anderen Ausführung eines Körpers zur Bildung der Referenzfläche;
Figur 4 schematisch die Anordnung einer Referenzfläche in einer Fahrbahn einer Strasse;
Figur 5 schematisch die Referenzfläche innerhalb einer Messfläche zur Messung des Fahrbahnbelags bzw. Strassenbelags; und
Figur 6 schematisch die Anordnung mehrerer Referenzflächen auf einer Fahrbahn.

### Weg(e) zur Ausführung der Erfindung

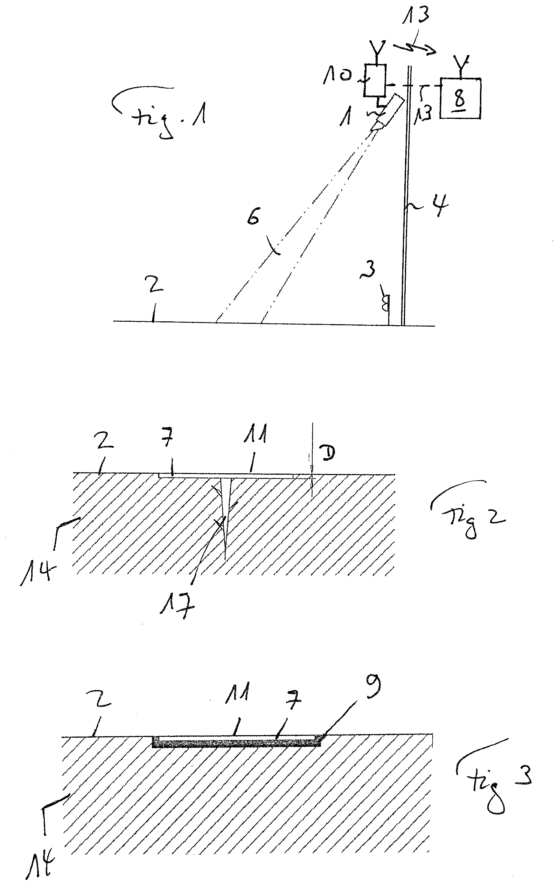

Figur 1 zeigt die Anordnung eines kontaktlos messenden Fahrbahnzustandssensors bzw. Strassenzustandssensors 1 neben einer Fahrbahn einer Strasse bzw. neben einer Strasse 2, insbesondere hinter einer Leitplanke 3. Die Begriffe Fahrbahn und Strasse werden in der vorliegenden Anmeldung synonym verwendet. Im Beispiel ist der Strassenzustandssensor 1 an einem Mast 4 erhöht über der Strassenoberfläche angeordnet, zum Beispiel in einer Höhe von 5 bis 8 Metern über der Strasse. Der Strassenzustandssensor weist in diesem Beispiel einen auf die Fahrbahn gerichteten IR-Sender und einen IR-Empfänger für von der Fahrbahn reflektierte IR-Strahlung auf, was mit dem Strahlengang 6 angedeutet ist. Er kann eine nur symbolisch als Kasten 10 dargestellte Auswertungsschaltung aufweisen, um die empfangene IR-Strahlung auszuwerten und basierend auf der Auswertung ein Signal 13 abzugeben. Die empfangene IR-Strahlung könnte auch als noch nicht ausgewertetes Sensorsignal des IR-Empfängers weitergeleitet und extern ausgewertet werden, so dass das Signal 13 erst von der externen Auswertung abgegeben wird. Der Strassenzustandssensor 1 kann drahtgebunden oder drahtlos mit einer ebenfalls nur symbolisch als Kasten 8 dargestellten Zentrale der Verkehrsüberwachung verbunden sein, die sich an einem anderen Ort befindet. Basierend auf dem Signal 13 kann lokal und/oder übergeordnet die Warnung der Strassenbenützer erfolgen, wenn das Signal angibt, dass auf der Referenzfläche Eis- oder Reifbildung erfolgt ist, was bedeutet, dass dies nachfolgend mit erheblicher Wahrscheinlichkeit auch auf dem Strassenbelag geschehen wird.

Der Strassenzustandssensor 1 kann ein spezifisch nur zur Durchführung des erfindungsgemässen Verfahrens ausgeführter Strassenzustandssensor 1 sein. In einer solchen Ausführung ist er zur Vermessung nur einer kleinen, vom Strassenbelagsmaterial unterschiedlichen Referenzfläche auf der Fahrbahn vorgesehen. Somit ist beim bevorzugten Vorgehen mit einer IR-Rückstreumessung der Strassenzustandssensor 1 so fokussiert, dass er im Wesentlichen nur die von der Referenzfläche ausgehende IR-Strahlung empfängt. Falls der Strassenzustandssensor alternativ ein Bild der Referenzfläche im sichtbaren Bereich aufnimmt und auswertet ist er ebenfalls im Wesentlichen auf die Referenzfläche fokussiert. Es kann in einem solchen Fall ein zweiter Strassenzustandssensor vorhanden sein, der auf bekannte Weise den Istzustand der eigentlichen Strassenoberfläche erfasst, also nicht nur die Referenzfläche erfasst. Um den apparativen Aufwand zu senken, kann der Strassenzustandssensor 1 aber auch ein kombinierter Sensor sein, der zu gewissen Zeiten nur die Referenzfläche erfasst, um das erfindungsgemässe Verfahren durchzuführen und zu anderen Zeiten den normalen Strassenbelag erfasst, um auf bekannte Weise dort bereits vorhandene Nässe bzw. Schnee oder die Trockenheit der Strasse festzustellen. Ein kombinierter Strassenzustandssensor wird nachfolgend noch an Hand von Beispielen gezeigt. Die bekannte Messung der normalen Strassenoberfläche wird aber, da der Fachperson bekannt, hier nicht besonders erläutert.

Figuren 2 und 3 zeigen Beispiele zur Bildung der vom Strassenbelagsmaterial unterschiedlichen Referenzfläche. Die Referenzfläche ist in diesem Beispiel jeweils in den Strassenbelag eingelassen, so dass sie im Wesentlichen bündig mit dem Strassenbelag zu liegen kommt. Die Referenzfläche kann auch an einer Stelle der Strasse neben der Fahrbahn bzw. an einer Stelle neben der Strasse angeordnet sein.

Die Referenzfläche ist als Teil der Strassenoberfläche verkehrsbelastbar und nicht verkehrsgefährdend ausgeführt. Die Referenzfläche weist vorzugsweise nur eine kleine Oberfläche auf und ist von oben gesehen rund oder eckig. Zum Beispiel weist sie einen Durchmesser oder eine Diagonale von nur 100mm bis 150mm auf. Dies genügt für eine IR-Reflexionsfernmessung mit einem entsprechend auf die Referenzfläche fokussierten Sensor 1. Damit Eisglätte oder Reifglätte auf der Referenzfläche früher auftritt als auf dem Strassenbelag, ist die Referenzfläche so ausgeführt, dass sie die Bildung von Eis- oder Reifglätte begünstigt, was insbesondere der Fall ist, wenn sie wasseranziehend (hydrophil) und gut wärmeleitend ist insbesondere besser wärmeleitend als der Strassenbelag ist. Erfindungsgemäß ist die Referenzfläche angeraut, um eine grosse Oberfläche aufzuweisen. Eine angeraute Oberfläche weist gegenüber einer glatten Oberfläche eine Vergrösserung der Wechselwirkungsschicht zwischen Boden und Luft auf. Durch die Hydrophilie kondensiert Luftfeuchtigkeit verstärkt auf der Referenzfläche. Wegen der guten Wärmeleitfähigkeit unter der Voraussetzung einer guten Wärmekopplung zur Umgebung erfolgt ein Gefrieren des kondensierten Wassers. Infolgedessen baut sich auf der Referenzfläche schneller eine Reif- oder Eisschicht auf als auf dem Strassenbelagsmaterial.

Als Material, aus dem ein mit seiner Oberfläche die Referenzfläche 11 bildender Körper 7 gebildet ist, wird vorzugsweise ein Metall verwendet, insbesondere Edelstahl oder ein anderes nicht- bis kaum korrodierendes Metall. Es kann ein Anteil eines Materials vorhanden sein, welches einen Selbstreinigungseffekt ergibt, zum Beispiel ein Anteil von TiO₂-Nanopartikeln. Auch ein offenporöser Metallschaum kann die Anforderungen an ein Material für die Referenzfläche erfüllen.

Im Beispiel von Figur 2 ist die Referenzfläche 11 die Oberseite eines nagelförmigen bzw. T-förmigen Körpers 7 aus Metall mit einem Dorn 17 zur Befestigung in der Strasse- bzw. Fahrbahn. Die Dicke D des Kopfes, welcher die Referenzfläche 11 bildet kann zum Beispiel 5mm bis 20mm betragen. Bevorzugt wird das Fahrbahnbelagsmaterial 14 entsprechend ausgenommen, um eine bündige Anordnung der Referenzfläche 11 mit der Oberfläche 2 des Fahrbahnbelagsmaterials zu schaffen. Im Beispiel von Figur 3 ist die Referenzfläche 11 von der Oberseite eines plattenförmigen Körpers 7 gebildet. Dieser ist in dem Fahrbahnbelagsmaterial eingelassen und es ist zusätzlich eine Isolation 9 als Wärmedämmung zwischen dem Fahrbahnbelagsmaterial und dem Körper 7 vorgesehen, um einen Wärmestrom vom Fahrbahnbelagsmaterial zum Körper 7 zu unterbinden. Eine Isolation als Wärmedämmung kann auch beim Beispiel von Figur 2 vorgesehen sein.

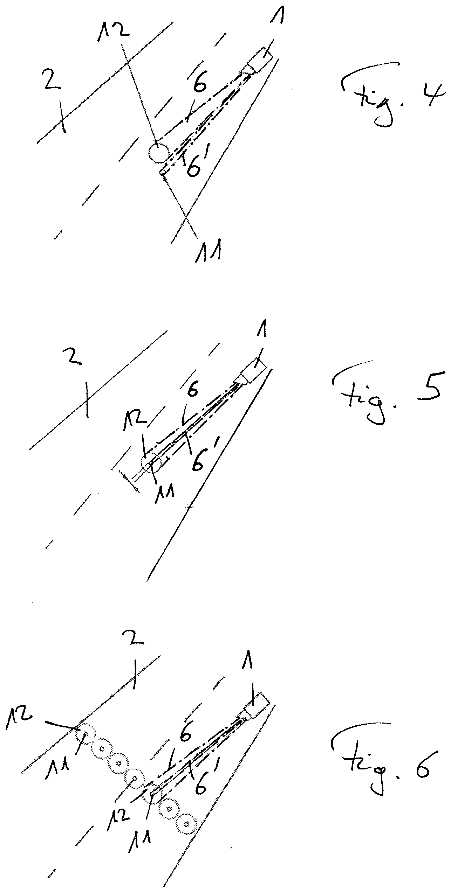

Wenn mit einem IR-Reflexionsverfahren gearbeitet wird, so ist es bevorzugt, dass sowohl eine Messung der Fahrbahnoberfläche erfolgt, um auf herkömmliche Weise den Istzustand der Fahrbahn zu detektieren, als auch gemäss der Erfindung eine Messung an der Referenzfläche durchzuführen. Dazu kann zum Beispiel die vorhandene Messeinrichtung so modifiziert sein, dass sie auf die Referenzfläche fokussieren kann. Ein solches Beispiel ist in Figur 4 dargestellt, welche schematisch eine Ansicht eines Teils der Strasse 2 und des kontaktlos messenden Strassenzustandssensors 1 zeigt. Dieser kann wie in Figur 1 dargestellt oberhalb der Strasse an einem Mast angeordnet sein. In diesem Beispiel ist dargestellt, dass der Strassenzustandssensor 1 einerseits und angedeutet mit dem Strahlengang 6 die dem Fachmann bekannte Erfassung des Strassenzustands in dem dabei betrachteten Bereich 12 durchführt und andererseits, und angedeutet mit dem Strahlengang 6', die Erfassung der Referenzfläche 11 durchführt. Dies kann mit einer optischen Fokussierung und Positionierung der Messstrahlen des Strassenzustandssensors 1 erfolgen. Der Strassenzustandssensor 1 weist zu diesem Zweck optische Elemente auf, die zum Beispiel motorisch, den Strahldurchmesser und die Position der IR-Laserstrahlen, die auf die Strasse bzw. auf die Referenzfläche 11 gerichtet werden anpassen und den Empfang der reflektierten IR-Strahlung entsprechend anpassen. Dabei wird, wie dargestellt, vom bekannten Normalmessbetrieb mit dem Strahlengang 6 zum Strahlengang 6' gewechselt, wobei der Strahlengang auf die Referenzfläche 11 eingeengt und positioniert wird. Bei der Erfassung der Referenzfläche 11 wird deren reflektierte IR-Strahlung untersucht, ob diese die Bildung von Eis oder Reif auf der Referenzfläche 11 anzeigt. Dies kann zum Beispiel und bevorzugt durch Vergleich des empfangenen Signals mit gespeicherten Signalen erfolgen, welche für die Referenzfläche ermittelt und für das Vorhandensein von Eis oder Reif charakteristisch sind. Nach dieser Untersuchung kann wieder zum Strahlengang 6 zur Messung der Strassenoberfläche gewechselt werden. Die Untersuchung der Referenzfläche 11 kann periodisch erfolgen oder aperiodisch und insbesondere häufiger und/oder länger dauernd zu Zeiten, an denen bekannterweise Eisglätte auftreten kann.

Anstelle eines Strassenzustandssensors mit einer einstellbaren Optik kann im Strassenzustandssensor 1 neben dem bekannten Lasersystem, welches den Strahlengang 6 aufweist, ein zusätzliches Lasersystem angeordnet sein, welches dauerhaft auf die Referenzfläche 11 fokussiert. Dieses zusätzliche Lasersystem kann integriert in einem bekannten Remote-NIR-Strassenanalysegerät vorgesehen sein oder als separates Modul an einem solchen angeordnet werden.

Figur 5 zeigt ein weiteres Beispiel, bei welchem die Referenzfläche 11 zentral im Sichtfeld der üblichen Strassenzustandsmessung mit dem normalerweise betrachteten Bereich 12 angeordnet ist und wobei Vermessungspunkte des Strassenzustandssensors 1 bzw. des Remote-NIR-Strassenanalysegeräts verschoben werden können, so dass sich die Laservermessungspunkte des Strassenzustandssensors mit Hilfe von Positionierungsmitteln bzw. Motoren zentralisieren und dezentralisieren lassen, so dass wahlweise Messpunkte im Bereich 12 oder im Bereich 11 betrachtet werden. Dies ist natürlich auch möglich, wenn die Referenzfläche 11 nicht zentral im Bereich 12 angeordnet ist.

Figur 6 zeigt ein weiteres Beispiel, wobei eine gerasterte Abfrage der Fahrbahn bzw. Strasse 2 erfolgt, wobei eine Vielzahl von Referenzflächen 11 in der Strasse 2 angeordnet sin. Dabei wird ähnlich wie beim Beispiel von Figur 5 sowohl ein Bereich 12 als auch der Bereich der Referenzfläche 11 separat abgefragt, wobei das in diesem Beispiel über die ganze Strasse bzw. über alle Fahrbahnen einer Strasse erfolgen kann.

Bei allen Beispielen ist es möglich, dass die Referenzfläche 11 innerhalb der Fahrbahn in der eigentlichen Rollspur der Fahrzeugreifen angeordnet wird oder ausserhalb der Fahrbahn in einem Seitenstreifen der Fahrbahn angeordnet wird oder auch ausserhalb der Strasse in einem benachbarten Bereich.

Die Erfindung betrifft somit ein Verfahren und eine Vorrichtung zur Erzeugung eines Signals, welches Signal die bevorstehende aber noch nicht erfolgte Bildung von Glätte auf einer Fahrbahn 2 anzeigt, wobei von der Fahrbahn, oder von einer Stelle benachbart der Fahrbahn, reflektierte Strahlung ausgewertet wird, welche von mindestens einer in oder auf der Fahrbahn oder der benachbarten Stelle angeordneten Referenzfläche 11 ausgeht, die von einem vom Fahrbahnbelagsmaterial unterschiedlichen Material gebildet ist. Die Referenzfläche , die eine angeraute Oberfläche aufweist, ist aus einem Material ausgewählt, auf welchem sich die Glätte früher ausbildet als auf dem Fahrbahnbelagsmaterial. Das Signal 13 wird abgegeben, wenn die Auswertung ergibt, dass sich auf der Referenzfläche 11 Glätte gebildet hat. Basierend auf diesem Signal ist eine Warnung der Strassenbenützer vor Glätte auf der Fahrbahn möglich, bevor sich diese auf der Fahrbahn ausbildet.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zur Erzeugung eines Signals, welches die bevorstehende Bildung von Glätte auf einer Fahrbahn (2) anzeigt, bevor diese auf der Fahrbahn entsteht, wobei von der Fahrbahn, oder von einer Stelle benachbart der Fahrbahn, reflektierte Strahlung ausgewertet wird, welche von mindestens einer in oder auf der Fahrbahn oder der benachbarten Stelle angeordneten Referenzfläche (11) ausgeht, die von einem vom Fahrbahnbelagsmaterial unterschiedlichen Material gebildet ist, welches aus einem Material ausgewählt ist, auf welchem sich die Glätte früher ausbildet als auf dem Fahrbahnbelagsmaterial, und wobei das Signal abgegeben wird, wenn die Auswertung ergibt, dass sich auf der Referenzfläche (11) Glätte gebildet hat, wobei eine Referenzfläche verwendet wird, die eine angeraute Oberfläche aufweist.

2. Verfahren nach Anspruch 1, wobei Licht im Infrarotbereich in Richtung der Referenzfläche ausgestrahlt und das von der Referenzfläche reflektierte Licht ausgewertet wird.

3. Verfahren nach Anspruch 2, wobei Licht im sogenannten nahen Infrarotbereich NIR (780nm bis 3000nm) und insbesondere in einem Bereich von ca. 900nm bis 2000nm verwendet wird.

4. Verfahren nach einem der Ansprüche 2 oder 3, wobei die Auswertung erfolgt, indem ein Vergleich des von der Referenzfläche reflektiertem Lichts mit gespeicherten, vorbekannten Informationen, insbesondere Kennlinien, erfolgt, welche für das Vorhandensein von Eis/Raureif auf der Referenzfläche (11) im verwendeten Infrarotbereich charakteristisch sind.

5. Verfahren nach Anspruch 1, wobei von der Referenzfläche reflektiertes sichtbares Licht ausgewertet wird, insbesondere, indem mindestens ein Bild der Referenzfläche im sichtbaren Bereich aufgenommen und die Bildung von Glätte auf der Referenzfläche durch die Auswertung des Bildes erfolgt.

6. Verfahren nach einem der Ansprüche 1 bis 5, wobei die Referenzfläche dauerhaft in oder auf der Fahrbahn oder neben der Fahrbahn angeordnet ist.

7. Verfahren nach einem der Ansprüche 1 bis 6, wobei die Referenzfläche (11) von der Oberfläche eines Körpers (7) gebildet ist, der in der Fahrbahn eingelassen ist oder an einer Stelle neben der Fahrbahn angeordnet ist.

8. Verfahren nach einem der Ansprüche 1 bis 7, wobei eine Referenzfläche mit einem Durchmesser oder einer Diagonalen von 100mm bis 200mm, insbesondere bis 150mm, verwendet wird.

9. Verfahren nach einem der Ansprüche 1 bis 8, wobei eine Referenzfläche verwendet wird, deren Oberfläche hydrophil ist.

10. Verfahren nach einem der Ansprüche 1 bis 9, wobei eine Referenzfläche aus Metall verwendet wird, insbesondere aus rostfreiem Stahl oder aus einem anderen nicht- oder kaum korrodierenden Metall, oder wobei eine Referenzfläche aus einem offenporösen Metallschaum verwendet wird, oder wobei eine Referenzfläche aus einer Farbschicht verwendet wird, die mit einem Anteil Metallpartikeln und/oder mit einem Anteil von Polymeren, welche nahes Infrarot reflektieren, versehen ist.

11. Verfahren nach einem der Ansprüche 1 bis 10, wobei eine vollständig ebene Referenzfläche verwendet wird,

12. Vorrichtung zur Erzeugung eines Signals, welches die bevorstehende Bildung von Glätte auf einer Fahrbahn (2) anzeigt, bevor diese auf der Fahrbahn entsteht, wobei die Vorrichtung mindestens eine in oder auf der Fahrbahn oder der benachbarten Stelle angeordnete Referenzfläche (11) aufweist, die von einem vom Fahrbahnbelagsmaterial unterschiedlichen Material gebildet ist, welches aus einem Material ausgewählt ist, auf welchem sich die Glätte früher ausbildet als auf dem Fahrbahnbelagsmaterial, und wobei die Vorrichtung einen Strassenzustandssensor (1) aufweist, welcher ausgebildet ist, um von der Referenzfläche, reflektierte Strahlung zu empfangen und welcher ausgebildet ist, um die von der Referenzfläche reflektierte Strahlung auszuwerten und ein Signal (13) abzugeben, wenn die Auswertung ergibt, dass sich auf der Referenzfläche (11) Glätte gebildet hat, oder welcher ausgebildet ist, um die von der Referenzfläche reflektierte Strahlung als Sensorsignal zur externen Auswertung abzugeben, wobei die Referenzfläche eine angeraute Oberfläche aufweist.

13. Vorrichtung nach Anspruch 12, wobei der Strassenzustandssensor ausgestaltet ist um Licht im Infrarotbereich in Richtung der Referenzfläche auszustrahlen und das von der Referenzfläche reflektierte Licht zu empfangen und auszuwerten oder für die Auswertung bereitzustellen.

14. Vorrichtung nach Anspruch 13, wobei die Wellenlänge des Lichts im sogenannten nahen Infrarotbereich NIR (780nm bis 3000nm) und insbesondere in einem Bereich von ca. 900nm bis 2000nm liegt.

15. Vorrichtung nach einem der Ansprüche 13 oder 14, wobei die Auswertung vornehmbar ist, indem ein Vergleich des von der Referenzfläche reflektiertem Lichts mit gespeicherten, vorbekannten Informationen, insbesondere Kennlinien, erfolgt, welche für das Vorhandensein von Eis/Raureif auf der Referenzfläche im verwendeten Infrarotbereich charakteristisch sind.

16. Vorrichtung nach Anspruch 12 wobei von dieser von der Referenzfläche reflektiertes sichtbares Licht auswertbar ist, insbesondere, indem mindestens ein Bild der Referenzfläche im sichtbaren Bereich aufnehmbar und die Bildung von Glätte auf der Referenzfläche durch die Auswertung des Bildes vornehmbar ist.

17. Vorrichtung nach einem der Ansprüche 12 bis 16, bei welcher die Referenzfläche dauerhaft in oder auf der Fahrbahn oder neben der Fahrbahn angeordnet ist.

18. Vorrichtung nach einem der Ansprüche 12 bis 17, wobei die Referenzfläche (11) von der Oberfläche eines Körpers (7) gebildet ist, der in der Fahrbahn eingelassen ist oder an einer Stelle neben der Fahrbahn angeordnet ist.

19. Vorrichtung nach einem der Ansprüche 12 bis 18, wobei die Referenzfläche einen Durchmesser oder eine Diagonale von 100mm bis 200mm, insbesondere bis 150mm, aufweist.

20. Vorrichtung nach einem der Ansprüche 12 bis 19, wobei die Referenzfläche eine hydrophile Oberfläche aufweist.

21. Vorrichtung nach einem der Ansprüche 12 bis 20, wobei die Referenzfläche aus Metall gebildet ist, insbesondere aus rostfreiem Stahl oder aus einem anderen nicht- oder kaum korrodierenden Metall, oder wobei die Referenzfläche aus einem offenporösen Metallschaum gebildet ist, oder wobei die Referenzfläche aus einer Farbschicht gebildet ist, die mit einem Anteil Metallpartikeln und/oder mit einem Anteil von Polymeren, welche nahes Infrarot reflektieren, versehen ist.

22. Vorrichtung nach einem der Ansprüche 12 bis 21, wobei die Referenzfläche im Wesentlichen vollständig eben ist.

## Claims

1. Method for generating a signal indicating the imminent formation of slipperiness on a roadway (2) before it forms on the roadway, wherein radiation reflected from the roadway, or from a location adjacent to the roadway, is evaluated, which radiation emanates from at least one reference surface (11) arranged in or on the roadway or the adjacent location, which is formed by a material different from the road surface material, which is selected from a material on which the slipperiness forms earlier than on the road surface material, and wherein the signal is emitted when the evaluation shows that slipperiness has formed on the reference surface (11), wherein a reference surface is used which has a roughened surface.

2. Method according to claim 1, wherein light in the infrared range is emitted in the direction of the reference surface and the light reflected from the reference surface is evaluated.

3. Method according to claim 2, wherein light in the so-called near infrared range NIR (780nm to 3000nm) and in particular in a range of approximately 900nm to 2000nm is used.

4. Method according to one of the claims 2 or 3, wherein the evaluation is carried out by comparing the light reflected from the reference surface with stored, previously known information, in particular characteristic curves, which are characteristic of the presence of ice/rime on the reference surface (11) in the infrared range used.

5. Method according to claim 1, wherein visible light reflected from the reference surface is evaluated, in particular by taking at least one image of the reference surface in the visible range and the formation of slipperiness on the reference surface is effected by evaluating the image.

6. Method according to one of the claims 1 to 5, where the reference surface is permanently located in or on the road surface or adjacent to the road surface.

7. Method according to one of the claims 1 to 6, wherein the reference surface (11) is formed by the surface of a body (7) which is embedded in the roadway or is arranged at a point beside the roadway.

8. Method according to one of the claims 1 to 7, wherein a reference surface with a diameter or diagonal of 100 mm to 200 mm, in particular up to 150 mm, is used.

9. Method according to one of the claims 1 to 8, wherein a reference surface is used, the surface of which is hydrophilic.

10. Method according to one of the claims 1 to 9, wherein a reference surface of metal is used, in particular of stainless steel or of another metal which does not corrode or hardly corrodes at all, or wherein a reference surface of an open-porous metal foam is used, or wherein a reference surface of a paint layer is used, which is provided with a proportion of metal particles and/or with a proportion of polymers which reflect near infrared.

11. Method according to one of the claims 1 to 10, wherein a completely flat reference surface is used.

12. Device for generating a signal indicating the imminent formation of slipperiness on a roadway (2) before this forms on the roadway, the device having at least one reference surface (11) arranged in or on the roadway or the adjacent location, which is formed by a material different from the roadway surface material, which is selected from a material on which the slipperiness forms earlier than on the roadway surface material, and wherein the device comprises a road condition sensor (1) which is designed to receive reflected radiation from the reference surface and which is designed to evaluate the radiation reflected from the reference surface and to output a signal (13) if the evaluation shows that slipperiness has formed on the reference surface (11), or which is designed to output the radiation reflected from the reference surface as a sensor signal for external evaluation, wherein the reference surface has a roughened surface.

13. Device according to claim 12, wherein the road condition sensor is adapted to emit light in the infrared range in the direction of the reference surface and to receive and evaluate the light reflected from the reference surface or to make it available for evaluation.

14. Device according to claim 13, wherein the wavelength of the light lies in the so-called near infrared range NIR (780nm to 3000nm) and in particular in a range of approximately 900nm to 2000nm.

15. Device according to one of claims 13 or 14, wherein the evaluation can be carried out by comparing the light reflected from the reference surface with stored, previously known information, in particular characteristic curves, which are characteristic of the presence of ice/rime on the reference surface in the infrared range used.

16. Device according to claim 12, wherein visible light reflected from the reference surface can be evaluated by it, in particular by taking at least one image of the reference surface in the visible range and the formation of slipperiness on the reference surface can be performed by evaluating the image.

17. Device according to one of the claims 12 to 16, wherein the reference surface is permanently arranged in or on the roadway or next to the roadway.

18. Device according to one of the claims 12 to 17, wherein the reference surface (11) is formed by the surface of a body (7) which is embedded in the roadway or is arranged at a point next to the roadway.

19. Device according to one of the claims 12 to 18, wherein the reference surface has a diameter or diagonal of 100 mm to 200 mm, in particular to 150 mm.

20. Device according to one of the claims 12 to 19, wherein the reference surface has a hydrophilic surface.

21. Device according to one of the claims 12 to 20, wherein the reference surface is formed from metal, in particular from stainless steel or from another metal which does not corrode or hardly corrodes at all, or wherein the reference surface is formed from an openpore metal foam, or wherein the reference surface is formed from a paint layer which is provided with a proportion of metal particles and/or with a proportion of polymers which reflect near infrared.

22. Device according to any one of the claims 12 to 21, wherein the reference surface is substantially completely flat.

## Revendications

1. Procédé pour générer un signal indiquant la formation imminente d'une glissance sur une route (2) avant qu'elle ne se forme sur la route, dans lequel le rayonnement réfléchi par la route, ou par un emplacement adjacent à la route, est route, lequel rayonnement émane d'au moins une surface de référence (11) disposée dans ou sur la route ou l'emplacement adjacent, qui est formée par un matériau différent du matériau de surface de la route, qui est sélectionné parmi un matériau sur lequel la glissance se forme plus tôt que sur le matériau de surface de la route, et dans lequel le signal est émis lorsque l'évaluation montre que la glissance s'est formée sur la surface de référence (11), dans lequel une surface de référence est utilisée qui a une surface rugueuse.

2. Procédé selon la revendication 1, dans lequel une lumière dans la gamme infrarouge est émise en direction de la surface de référence et la lumière réfléchie par la surface de référence est évaluée.

3. Procédé selon la revendication 2, dans lequel une lumière dans la gamme dite du proche infrarouge NIR (780 nm à 3000 nm) et notamment dans une gamme d'environ 900 nm à 2000 nm est utilisée.

4. Procédé selon l'une des revendications 2 ou 3, dans lequel l'évaluation est réalisée en comparant la lumière réfléchie par la surface de référence avec des informations mémorisées, connues au préalable, notamment des courbes caractéristiques, qui sont caractéristiques de la présence de glace/de gravillons sur la surface de référence (11) dans la gamme infrarouge utilisée.

5. Procédé selon la revendication 1, dans lequel la lumière visible réfléchie par la surface de référence est évaluée, en particulier en prenant au moins une image de la surface de référence dans le domaine visible et la formation de glissance sur la surface de référence est effectuée par l'évaluation de l'image.

6. Procédé selon l'une des revendications 1 à 5, dans lequel la surface de référence se trouve en permanence dans ou sur la surface de la route ou à côté de la surface de la route.

7. Procédé selon l'une des revendications 1 à 6, dans lequel la surface de référence (11) est formée par la surface d'un corps (7) qui est encastré dans la route ou qui est disposé en un point à côté de la route.

8. Procédé selon l'une des revendications 1 à 7, dans lequel une surface de référence dont le diamètre particulièrement jusqu'à 150 mm, est utilisée.

9. Procédé selon l'une des revendications 1 à 8, dans lequel une surface de référence dont la surface est hydrophile est utilisée.

10. Procédé selon l'une des revendications 1 à 9, dans lequel une surface de référence en métal est utilisée, notamment en acier inoxydable ou en un autre métal ne se corrodant pas ou peu, ou dans lequel une surface de référence d'une mousse métallique à pores ouverts est utilisée, ou dans lequel une surface de référence d'une couche de peinture pourvue d'une proportion de particules métalliques et/ou d'une proportion de polymères réfléchissant le proche infrarouge est utilisée.

11. Procédé selon l'une des revendications 1 à 10, dans lequel une surface de référence complètement plane est utilisée.

12. Dispositif pour générer un signal indiquant la formation imminente d'une glissance sur une route (2) avant que celle-ci ne se forme sur la route, le dispositif comportant au moins une surface de référence (11) disposée dans ou sur la route ou l'emplacement adjacent, qui est formée par un matériau différent du matériau de surface de la route, qui est choisi parmi un matériau sur lequel la glissance se forme plus tôt que sur le matériau de surface de la route, et dans lequel le dispositif comprend un capteur d'état de la route (1) qui est conçu pour recevoir un rayonnement réfléchi par la surface de référence et qui est conçu pour évaluer le rayonnement réfléchi par la surface de référence et pour délivrer un signal (13) si l'évaluation montre qu'une glissance s'est formée sur la surface de référence (11), ou qui est conçu pour délivrer le rayonnement réfléchi par la surface de référence comme un signal de capteur pour une évaluation externe, dans lequel la surface de référence a une surface rugueuse.

13. Dispositif selon la revendication 12, dans lequel le capteur d'état de la route est adapté pour émettre de la lumière dans la plage infrarouge en direction de la surface de référence et pour recevoir et évaluer la lumière réfléchie par la surface de référence ou pour la mettre à disposition pour une évaluation.

14. Dispositif selon la revendication 13, dans lequel la longueur d'onde de la lumière se situe dans la gamme dite du proche infrarouge NIR (780 nm à 3000 nm) et notamment dans une gamme d'environ 900 nm à 2000 nm.

15. Dispositif selon l'une des revendications 13 ou 14, dans lequel l'évaluation peut être réalisée en comparant la lumière réfléchie par la surface de référence avec des informations mémorisées, connues au préalable, notamment des courbes caractéristiques, qui sont caractéristiques de la présence de glace/prime sur la surface de référence dans la gamme infrarouge utilisée.

16. Dispositif selon la revendication 12, dans lequel la lumière visible réfléchie par la surface de référence peut être évaluée par celui-ci, notamment par la prise d'au moins une image de la surface de référence dans le domaine visible et la formation de glissance sur la surface de référence peut être réalisée par l'évaluation de l'image.

17. Dispositif selon l'une des revendications 12 à 16, dans lequel la surface de référence est disposée de manière permanente dans ou sur la route ou à côté de la route.

18. Dispositif selon l'une des revendications 12 à 17, dans lequel la surface de référence (11) est formée par la surface d'un corps (7) qui est encastré dans la route ou est disposé en un point à côté de la route.

19. Dispositif selon l'une des revendications 12 à 18, dans lequel la surface de référence présente un diamètre ou une diagonale de 100 mm à 200 mm, notamment à 150 mm.

20. Dispositif selon l'une des revendications 12 à 19, dans lequel la surface de référence présente une surface hydrophile.

21. Dispositif selon l'une des revendications 12 à 20, dans lequel la surface de référence est formée de métal, notamment d'acier inoxydable ou d'un autre métal qui ne se corrode pas ou peu, ou dans lequel la surface de référence est formée d'une mousse métallique à pores ouverts, ou dans lequel la surface de référence est formée d'une couche de peinture qui est pourvue d'une proportion de particules métalliques et/ou d'une proportion de polymères qui réfléchissent le proche infrarouge.

22. Dispositif selon l'une des revendications 12 à 21, dans lequel la surface de référence est essentiellement totalement plane.
